# EUROPEAN PATENT SPECIFICATION

(11) **EP 4 428 190 B1**
(45) Date of publication and mention of the grant of the patent: **25.11.2026**
(21) Application number: 22886643.0
(22) Date of filing: 07.10.2022
(51) Int. Cl.: C08L 21/00, G01M 3/20, G02F 1/17, G01M 3/18, G01M 3/38, F16J 15/06

(54) **RUBBER PRODUCT, TEST JIG AND TEST DEVICE FOR SEAL MATERIAL, AND LEAK DETECTION MEMBER**
KAUTSCHUKPRODUKT, TESTVORRICHTUNG UND TESTVORRICHTUNG FÜR DICHTUNGSMATERIAL SOWIE LECKDETEKTIONSELEMENT
PRODUIT EN CAOUTCHOUC, GABARIT DE TEST ET DISPOSITIF DE TEST POUR MATÉRIAU D'ÉTANCHÉITÉ, ET ÉLÉMENT DE DÉTECTION DE FUITE

(30) Priority: 01.11.2021 JP 2021178658
(43) Date of publication of application: 11.09.2024
(73) Proprietor: NOK Corporation, Tokyo 105-8585 (JP); TOKYO UNIVERSITY OF SCIENCE FOUNDATION, Tokyo 162-8601 (JP)
(72) Inventor: SAKURAI Takayuki, Tsujido-shinmachi, Fujisawa-shi, Kanagawa 251- 0042 (JP); OSADA Kentaro, Tsujido-shinmachi, Fujisawa-shi, Kanagawa 251- 0042 (JP); TADANO Hikaru, Makinohara-shi, Shizuoka 421-0532 (JP); KAWAI Tomohiro, Tsujido-shinmachi, Fujisawa-shi, Kanagawa 251- 0042 (JP); NISHIO Keishi, Tokyo 162-8601 (JP)
(74) Representative: Global IP Europe Patentanwaltskanzlei
(86) International application number: PCT/JP2022/037574
(87) International publication number: WO 2023/074312

(56) References cited:
- WO-A1-2017/047290
- CN-A- 102 435 402
- CN-A- 108 072 497
- JP-A- 2014 228 105
- JP-A- 2015 501 296
- JP-A- 2016 161 397
- JP-A- 2017 181 996
- JP-A- 2017 181 996
- JP-A- 2018 172 538
- JP-A- 2021 502 044
- US-A1- 2007 224 081
- US-A1- 2010 127 460
- US-A1- 2020 088 648
- ISHIHARA RYO; YAMAGUCHI YUKI; TANABE KANTA; MAKINO YOSHIHIRO; NISHIO KEISHI: "Preparation of Pt/WO3-coated polydimethylsiloxane membrane for transparent/flexible hydrogen gas sensors", MATERIALS CHEMISTRY AND PHYSICS, ELSEVIER SA, SWITZERLAND, TAIWAN, REPUBLIC OF CHINA, vol. 226, 1 January 1900 (1900-01-01), Switzerland, Taiwan, Republic of China , pages 226 - 229, XP085606002, ISSN: 0254-0584, DOI: 10.1016/j.matchemphys.2018.12.052

## Description

### Technical Field

The present invention relates to a test jig and a test apparatus for a sealing member. More specifically, the present invention relates to a test jig for performing a leakage test of a sealing member and a test apparatus for a sealing member.

### Description of the Related Art

Conventionally, rubber products using rubber as a main raw material are used in many fields, and for example, the sealing member such as packings and gaskets are widely used in automobiles and electric appliances. More specifically, for example, a cell assembly in a fuel cell is sealed with a gasket (rubber) (see, for example, Patent Document 1).

The gasket prevents hydrogen leakage in the fuel cell, and there are concerns that hydrogen leakage may cause various problems. Therefore, inspection (seal inspection) before assembling the fuel cell is particularly important, and it is required in the seal inspection to confirm the presence or absence of leakage and a position of the leakage.

In such a seal inspection, a method of detecting a hydrogen leak using a chromic material has been proposed (see, for example, Patent Document 2).

CN108072497A relates to a tape product, and method of manufacturing the product, which incorporates a gas sensing pigment that causes the tape to change color upon exposure to gases such as hydrogen and hydrogen sulfide.

JP2017181996A aims to provide a chromic sheet having flexibility and high durability, and to provide a method for producing the same.

CN102435402A describes a device for detecting the leak rate of a sealing ring.

US20100127460A1 describes a seal device with integrated leak detection capability for detecting the initiation of a leak of a contained fluid.

US20070224081A1 describes a hydrogen sensor, comprising a composition of matter comprising a gas permeable matrix material intermixed and encapsulating at least one chemochromic pigment, said chemochromic pigment changing color in the presence of H2.

### Citation List

### Patent Document

[Patent Document 1] WO 2017/047290
[Patent Document 2] JP 2017-181996A

### SUMMARY OF THE INVENTION

### Problem to be solved by the Invention

However, the sheet described in Patent Document 2 needs to be stuck to a gasket or the like to be inspected at the time of seal inspection. Further, after the inspection is completed, it is necessary to peel off the sheet from the gasket to be inspected, and there is a concern that the inspection target is damaged when the sheet is peeled off.

Further, when the sheet described in Patent Document 2 is attached to an inspection target, a slight gap may occur between the sheet and the inspection target, and if gap is present, parts around the gap may be discolored widely. Therefore, although leakage is observed, there is a concern that an accurate position of the leakage cannot be detected. Thus, there is still room for improvement for even the sheet described in Patent Document 2.

The present invention has been made in view of the prior art, and an object of the present invention is to develop a test jig and a test apparatus for a sealing member, which are capable of preventing the inspection target from being damaged at the time of seal inspection, and further capable of easily and accurately detecting the presence or absence of leakage and a position of the leakage.

### Means for Solving the Problems

The present invention provides a test jig as defined in independent claim 1, and preferred embodiments as defined in dependent claims 2 to 5, and a test apparatus for a sealing member as defined in claim 6.
[1] A test jig for performing a leakage test of a sealing member having a ring shape that seals a gap between two members, including
   a mounting table that has a mounting surface on which the sealing member is mounted,
   an upper disposed member that is disposed on the upper side of the sealing member mounted on the mounting table, and
   a leakage detection member that is positioned on the outer side of the sealing member mounted on the mounting table, wherein
   the leakage detection member includes a gas chromic material that changes a color thereof reversibly or changes an electric resistance value thereof, due to oxidation-reduction reaction, and
   when leakage from the sealing member occurs, a part of the leakage detection member where the leakage from the sealing member is observed changes a color thereof.
[2] The test jig according to [1], including a sheet member having a sheet shape that is disposed on at least one side of the mounting table side and the upper disposed member side of the sealing member, wherein
   the sheet member disposed on the at least one side constitutes at least a part of the leakage detection member.
[3] The test jig according to [1] or [2], including a protrusion that protrudes from the mounting surface of the mounting table, wherein
   the protrusion constitutes at least a part of the leakage detection member.
[4] The test jig according to any one of [1] to [3], wherein the upper disposed member is made of a transparent member.
[5] The test jig according to any one of [1] to [4], wherein
   the leakage detection member comprises a cylindrical elastic portion having a cylindrical shape that is formed by an elastic material including the gas chromic material, and
   at least one pair of electrodes that are disposed on an outer peripheral surface of the cylindrical elastic portion.
[6] A test apparatus for a sealing member including
   the test jig according to any one of [1] to [5], and
   a photographing unit that records changes of the leakage detection member in the test jig.

The test jig for performing a leakage test of a sealing member according to the present invention has an effect of being able to easily and accurately detect the presence or absence of leakage in the sealing member and a position of the leakage.

The test apparatus for a sealing member according to the present invention has an effect of being able to easily and accurately detect the presence or absence of leakage in the sealing member and a position of the leakage.

### BRIEF DESCRIPTION OF THE DRAWINGS

FIG. 1 is a plan view schematically showing a sealing member which is one disclosure of the rubber product.
FIG. 2 is a perspective view schematically showing a sealing member which is a disclosure of the rubber product.
FIG. 3 is an explanatory view schematically showing a state in which the presence or absence of leakage in the sealing member which is one disclosure of the rubber product.
FIG. 4 is an explanatory view schematically showing a state after the presence or absence of leakage in the sealing member shown in FIG. 1 or the like is tested.
FIG. 5 is a side view schematically showing an embodiment of a test jig for a sealing member according to the present invention in such a manner of a see-through view for a part of the embodiment.
FIG. 6 is an explanatory view schematically showing a state in such a manner of a see-through view for the upper member of the test jig for the sealing member shown in FIG. 5.
FIG. 7 is an explanatory diagram schematically showing a state in which the presence or absence of leakage in the sealing member or the like in one embodiment of a test apparatus for a sealing member according to the present invention is tested.
FIG. 8 is an explanatory view schematically showing a state after the presence or absence of leakage in the sealing member or the like using the test jig for a sealing member shown in FIG. 5 is tested.
FIG. 9 is a side view schematically showing an embodiment of a leak detection member according to the present invention.
FIG. 10 is a plan view schematically showing an embodiment of a leakage detection member according to the present invention.
FIG. 11 is an explanatory view schematically showing a state in which the leak detection member shown in FIG. 9 is attached to a fastening portion of a pipe.
FIG. 12 is an explanatory view schematically showing a state in which leak is monitored using the leak detection member shown in FIG. 9.
FIG. 13 is an explanatory view schematically showing a state in which another embodiment of a leakage detection member according to the present invention is attached to a fastening portion of a pipe.
**FIG. 14** s an explanatory view schematically showing a state in which further another embodiment of a leakage detection member according to the present invention is attached to a fastening portion of a pipe.

### Mode for carrying out the invention

Embodiment according to the present invention will be described below referring to the drawings. It should be understood that the present invention is not limited to the following embodiment. Modifications can be made as appropriate based on ordinary knowledge of a person skilled in the art without departing from the scope of the appended claims.

### (1) Rubber product

A disclosure of a rubber product includes a gas chromic material that changes a color thereof reversibly or changes an electric resistance value thereof, due to oxidation-reduction reaction. This rubber product can easily and accurately detect the presence or absence of leakage and a position of leakage.

The gas chromic material is a material that changes a color thereof reversibly or changes an electric resistance value thereof, due to oxidation-reduction reaction. Such a gas chromic material can be, for example, transition metal oxides such as tungsten oxide, vanadium oxide, niobium oxide, tantalum oxide, zirconium oxide, and chromium oxide, as described below. **In** order to accelerate the reaction, it is preferable to further load a catalyst such as platinum or chromium. For example, tungsten oxide and platinum are more preferably contained.

**In** the rubber product, light transmittance is changed (that is, transmittance in a specific wavelength band is greatly changed) due to oxidation-reduction reaction, which leads to change of appearance of a color thereof.

The rubber used as the material of the rubber product may be any conventionally known rubber, and usage of the rubber product is not particularly limited, and may be used as a sealing product such as a sealing member.

The rubber product can be produced, for example, as follows. First, a solid material containing platinum (Pt) and tungsten oxide (WO₃) is synthesized by a conventionally known process (see, for example, JP 2017-181996A). The synthesized solid material is then ground. Here, examples of grinding means for the solid material include a bead mill, a jet mill, and a mortar. In order to improve the dispersibility of Pt and WO₃ in the rubber product, a surface treatment may be performed using any dispersant.

The ground solid material (sometimes referred to as "Pt/WO₃") is then mixed with raw rubber along with other ingredients. The timing of the mixing is not particularly limited as long as it is at a stage before the rubber is vulcanized, such as at the time of kneading or at the time of promoting for introduction of a vulcanizing agent. The mixing device is not particularly limited, and a general device used for kneading rubber such as a kneader or a roll can be employed. When liquid rubber is used as the raw rubber, it may be mixed manually without using a device. Then, a rubber material in which Pt/WO₃ is mixed is formed into an arbitrary form and vulcanized, whereby the rubber product can be produced.

### (2) Sealing product

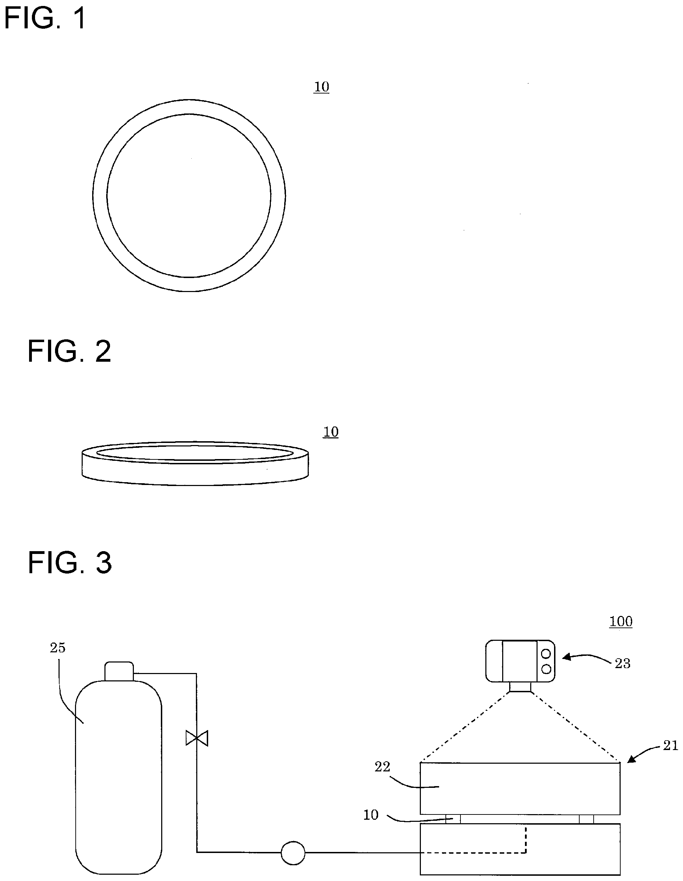

A disclosure of a rubber product is a sealing product 10 shown in FIGS. 1 and 2. The sealing product 10 is a sealing member that seals a gap between two members (e.g., two pipes or two separators), and the sealing member includes a gas chromic material that changes a color thereof reversibly or changes an electric resistance value thereof, due to oxidation-reduction reaction, and has a ring shape.

Such a sealing product 10 can easily and accurately detect the presence or absence of leakage and a position of leakage. The sealing product 10 is a device for preventing leak of a fluid from the inside to the outside of a machine, and specifically the sealing product 10 can be an oil seal, a rubber gasket, an O ring, and the like.

Here, a sealing product such as an O-ring or a gasket is a device that is installed at a bond position between two machines to prevent a fluid or gas inside the machines from leaking to the outside. However, there is a concern that leakage may occur due to insufficient airtightness caused by such as disturbances and sudden defects.

When leakage occurs, its cause is investigated and countermeasures are taken, which requires identification of the leak position. However, when the sealed medium is a colorless gas (e.g., hydrogen, etc.), it tends not to be easy to accurately identify the leak position visually.

Therefore, a method of observing variation in an applied pressure value, a method of measuring a flow rate of an applied gas, and the like are generally employed. However, in these methods, only the presence or absence of leak is determined, and there is a tendency that the leak position cannot be sufficiently specified.

For this reason, as a method of specifying a leak position, there is a method of finely dividing a pressure measurement area and specifying a leak position from individual pressure fluctuations. However, it cannot be determined which part of the contact line where the leak occurs. Therefore, as a method of inspecting a leak position more finely, there is also a method of specifying a leak position by applying a gas such as He and scanning a probe connected to a detector such as a leak detector in the vicinity of the test object. However, even in this method, since He diffuses prior to reaching the probe, it tends to be difficult to measure when an amount of leak is small as in the case of a sealing product.

Next, as a method for visualizing a leak position, there is a foaming method in which an inspection liquid is applied to a seal portion, tightened with a transparent member such as an acrylic plate, and bubbles generated when pressure is applied are observed to identify the leak portion. However, even in this method, when an amount of leak is small, there is a concern that it is difficult to observe the bubbles, or that the inspection liquid itself becomes an auxiliary agent for sealing and stops the leak.

In addition, among gases that are sealed media, there are gases that are highly permeable for objects, such as H₂ and He. Of these gases, H₂ is widely known to be at risk of explosion due to reaction with O₂. Therefore, it is difficult to completely eliminate leakage of H₂ to the outside, but from the viewpoint of ensuring safety, it is required to keep an amount of leak to be minimum. In particular, a sealing product used to fill a gap between fastened portions is often formed by an elastomer with a relatively low density, which may result in transmission leakage.

In the present disclosure, it has been found that a sealing product itself can be utilized as a sensor by mixing a gas chromic material with a polymer material such as a resin.

When the sealing product itself is used as a sensor in this manner, it becomes easy to accurately identify a part where leak occurs, and further it is possible to save a trouble for installing another sensor device. That is, when a rubber product (specifically, a sealing product) is used, it is possible to detect leak while maintaining usage of members around it as they are.

Further, since the gas chromic material has reversibility, the gas chromic material can be used repeatedly in the same product, and thus is excellent in economical efficiency. Note that the time of the reversible reaction can be adjusted by using a polymer material having a low gas permeability or by forming two layers of a polymer material on top of each other. As the polymer material to be used, a material suitable for specifications and an environment for observing leak can be appropriately selected.

**In** addition, small leak (e.g., very small leak such as below 0.1 cc/min) can also be detected. This is because a detection method such as image processing of an image acquired by a camera or acquisition of an electric signal can be selected, whereby gas chromism color development performance (color tone and maintenance time) and resistance value change performance can be controlled in a use environment.

Furthermore, the sealing product can be applied not only to specify a leak position but also to visualize a flow of gas. For example, it is possible to apply the sealing product to visualization of unevenness of a flow rate of hydrogen flowing through a power generation surface of a cell for a fuel cell. That is, there is a flow of hydrogen inside the sealing product, the closer to a region, where a flow rate of hydrogen is large, an inner surface portion of the sealing product is, the more strongly (more darkly) a color of the inner surface portion of the sealing product changes, and the farther from the region having the large flow rate of hydrogen an inner surface portion of the sealing product is, the more lightly a color of the inner surface portion of the sealing product changes. Therefore, a check of a degree of discoloration of an inner surface portion of the sealing product makes it possible to obtain a distribution of a flow rate of hydrogen.

Such a sealing product (i.e., rubber product) can be used as a sealing member in contact with hydrogen gas and can be applied, for example, to a sealing member in a cell for a fuel cell and to a seal or a gasket for an engine that burn (explode) hydrogen, a hydrogen tank/pipe, and a hydrogen pipe in a plant.

When an elastic material in which a gas chromic material is mixed is applied to a sealing product (a sealing member used in a cell for a fuel cell and in contact with hydrogen in the cell), it is considered that hydrogen can be converted into water in the rubber (sealing product) due to an oxidation-reduction reaction caused by the gas chromic material. That is, since it is conceivable that hydrogen is converted into water before the hydrogen leaks to the outside, it is possible to prevent hydrogen leak and reduce a risk of an accident due to hydrogen leak. Here, it is considered that there is a small amount of oxygen penetrate inside the sealing product on the low-pressure side of the sealing product, and a part of hydrogen immediately before leak is converted to water by the reduction reaction with the oxygen.

Further, there is a process of confirming the presence or absence of leak from a sealing product at a manufacturing stage of the sealing product, but in this confirmation process, it is desired that the presence or absence of leak can be accurately detected.

In the sealing product, a gas chromic material is contained in the sealing product itself, and the sealing product itself directly changes in response to leak, so that a position of the leak can be detected more accurately and easily. In addition, when hydrogen gas is used, hydrogen leak can be prevented, and a risk of an accident due to hydrogen leak can be reduced. Here, when a hydrogen detection sheet (for example, refer to Patent Document 2) is separately used, a gap may occur between a leak detection target and the hydrogen detection sheet, and in this case, there is a concern that a position of leak cannot be accurately detected. That is, since the part where the gap exists is widely discolored, the presence of the leak can be recognized, but there is a tendency that it is insufficient to accurately confirm the location of the leak. On the other hand, in the sealing product, since the leak detection target (the sealing product itself) is discolored as described above due to the occurrence of the leak, the position of the leak can be accurately grasped. In addition, since adoption of a separate member such as the above-mentioned hydrogen detection sheet for a leak detection target and direct attachment of the separate member to the leak detection target are avoided, it is possible to avoid damaging the inspection target (that is, the leak detection target) at the time of seal inspection.

The sealing product has elasticity, and the material thereof is not particularly limited, and examples thereof include vinyl methyl silicone rubber (VMQ), vinylidene fluoride rubber (FKM), ethylene propylene diene rubber (EPDM), acrylonitrile-butadiene rubber (NBR), and the like. The sealing product may be transparent. If it is transparent, leak due to cracks or the like inside the sealing product can be reliably confirmed from the outside by the discoloration. As long as the inside of the sealing product can be visually recognized, it can be colored or colorless, but it is preferable that it is colorless. In the present specification, being "transparent" includes being transparent to the extent that light is transmitted (being translucent) in addition to being completely transparent.

The gas chromic material is a material that changes a color thereof reversibly or changes an electric resistance value thereof, due to oxidation-reduction reaction. Such a gas chromic material can be, for example, transition metal oxide such as tungsten oxide, vanadium oxide, niobium oxide, tantalum oxide, zirconium oxide, and chromium oxide. In order to accelerate the reaction, it is preferable to further load a catalyst such as platinum or chromium. For example, tungsten oxide and platinum are more preferably contained.

Note that the reaction of the gas chromic material is a reversible oxidation-reduction reaction, and the higher the hydrogen concentration is, the higher change performance thereof is such that the more easily a color thereof develops or the lower an electric resistance value thereof is. Further, the higher the oxygen concentration is, the lower change performance thereof about development of a color thereof or an electric resistance value thereof. In addition, the higher the temperature is, the more easily the reaction is activated, which leads to increase of responsiveness about development of a color thereof or an electric resistance value thereof. Moreover, also when an amount of the gas chromic material contained in the polymer material is increased, the change performance is increased.

There is no particular limitation on a condition in which the sealing product 10 is used, and the sealing product 10 is used in a temperature environment of, for example, 60° C to 230° C and accurately detects the presence or absence of leakage and a position of leakage in such a temperature environment.

The fluid to be detected is not particularly limited, and an example thereof is a gas other than the atmosphere, specifically hydrogen or the like. For example, hydrogen is used as a fuel gas of a solid polymer fuel cell, and the hydrogen is sealed in the cell using a sealing product. There is also a concern that such hydrogen may leak very slightly when the battery is subjected to shock, vibration, or the like. Therefore, by using the sealing product, it is possible to reliably and easily detect the presence or absence of leak and a position of leak.

As shown in FIG. 3, the sealing product 10 can be attached to a test unit 21 of a test apparatus 100 to perform a test for confirming the presence or absence of leak and a position of leak. The test apparatus 100 includes a test unit 21, a photographing section 23 for recording a change in the sealing product 10 attached to the test unit 21, and a test fluid supplying unit 25 for supplying a test fluid such as hydrogen to the test unit 21. Incidentally, a member (an upper member 22) that presses the sealing product 10 from above in the test unit 21 has a transparent member, so that the change of the sealing product 10 during the test can be observed.

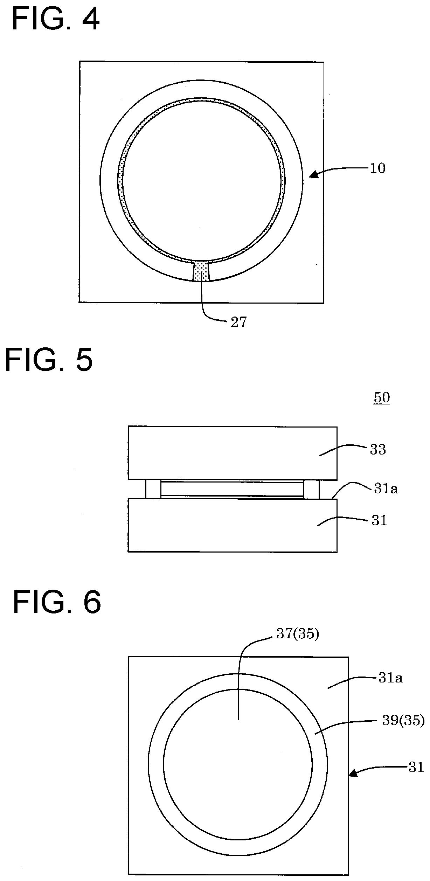

The test apparatus 100 can be used to test the presence or absence of leak in the sealing product 10, and when the sealing product 10 has leak, a discolored portion 27 is confirmed over the entire width direction of the sealing product 10, as shown in FIG. 4. In this way, it is possible to easily detect the presence or absence of leak and a position of leak.

After the sealing product 10 is disposed in a fastening portion such as a pipe, it is possible to easily confirm leak due to aging or the like which occurs during use, and a position where the leak occurs.

### (3) Test jig

One embodiment of a test jig according to the present invention is a test jig 50 shown in FIGS. 5 and 6. The test jig 50 is a test jig for performing a leakage test of a sealing member having a ring shape that seals a gap between two members. The test jig 50 includes a mounting table 31 that has a mounting surface 31a on which the sealing member is mounted, an upper disposed member 33 that is disposed on the upper side of the sealing member mounted on the mounting table 31, and a leakage detection member 35 that is positioned on the outer side of the sealing member mounted on the mounting table 31. Here, the leakage detection member 35 includes a gas chromic material that changes a color thereof reversibly or changes an electric resistance value thereof, due to oxidation-reduction reaction. When leakage from the sealing member occurs, a part of the leakage detection member 35 where the leakage from the sealing member is observed changes a color thereof or an electric resistance value thereof, whereby the test jig 50 can detect the presence or absence of the leakage and a position of the leakage, with the above configuration of the test jig 50.

The test jig 50 for a sealing member can easily and accurately detect the presence or absence of leakage in the sealing member and a position of leakage. In addition, since in the test jig 50, the sealing member is mounted on the mounting table 31 at the time of the seal inspection, it is possible to avoid damaging the inspection target at the time of the seal inspection.

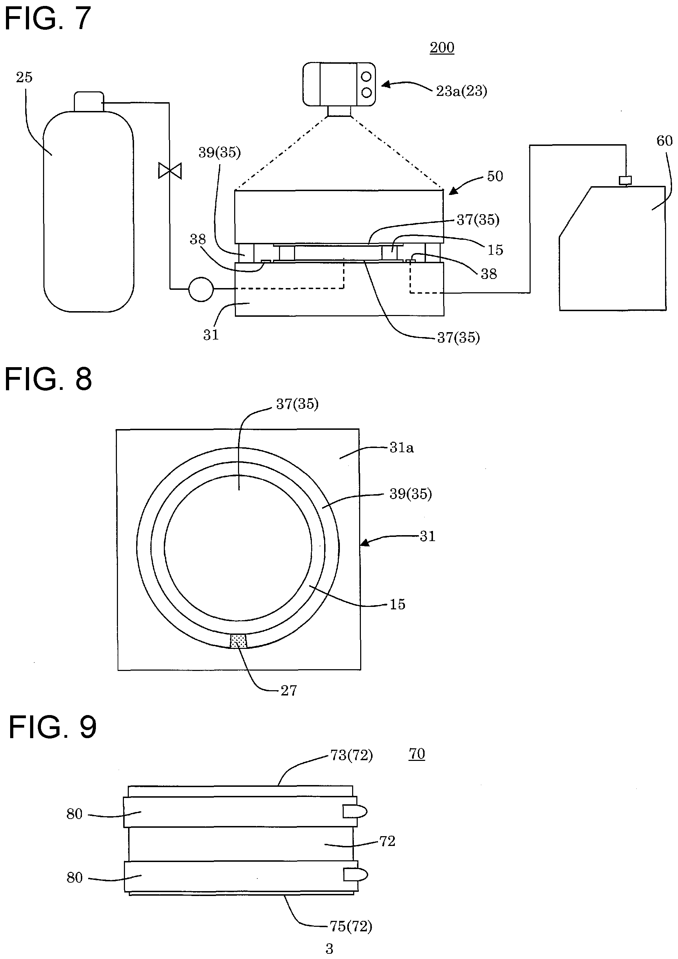

Here, as shown in FIG. 7, the test jig 50 is a jig that is attached to a part of a test unit of a test apparatus 200 for testing sealability of a sealing member 15, and then detects the presence or absence of leak of a test fluid and a position of leak through a change of the color or the like using hydrogen or the like as the test fluid. When the sealing member 15 (a test specimen to be tested for sealability) is placed in the test jig 50, the area inside the sealing member 15 is sealed. The test apparatus 200 has the same configuration as the test apparatus 100 except that the test jig 50 is installed in the test unit.

FIG. 8 is a plan view showing a condition after the test jig 50 is attached to the test apparatus 200 and sealability of the sealing member 15 is tested, and shows that the part of the leakage detection member 35 corresponding to a part of the sealing member 15 in which the leakage from the sealing member 15 exists, changes a color thereof, whereby a discolored part 27 appears.

In the same way as the above mentioned sealing product, the sealing member is a device for preventing leak of a fluid from the inside to the outside of a machine, and specifically the sealing member can be an oil seal, a rubber gasket, an O ring, and the like.

### (3-1) Mounting table

The mounting table 31 has a mounting surface 31a on which the sealing member 15 is mounted. As long as the mounting table 31 has a mounting surface 31a as described above, its material, shape, size, and the like are not particularly limited.

The material of the mounting table 31 is not particularly limited, and any material may be used as long as it does not leak a test fluid when the mounting table 31 holds the sealing member. Examples of the material of the mounting table 31 include a resin, glass, steel material such as stainless steel, and aluminum.

FIG. 5 and FIG. 6 show a cubic mounting table 31 which is an example of the mounting table 31 having a mounting surface 31a on which a sealing member 15 is mounted, on a top surface thereof.

### (3-2) Upper disposed member

The upper disposed member 33 is disposed on the upper side of the sealing member mounted on the mounting table 31. A material, shape, size, and the like of the upper disposed member 33 are not particularly limited and can be appropriately determined. FIG. 5 shows a cubic upper disposed member 33, and a sheet member 37 which is a leakage detection member 35, is positioned on a surface on the side of the mounting table 31, of the upper disposed member 33.

A material of the upper disposed member 33 is not particularly limited in the same way as the mounting table 31 as long as the material does not allow a test fluid to leak when the sealing member is held. Examples of the material of the upper disposed member 33 include resin, glass, a steel material such as stainless steel, and aluminum.

More specifically, the upper disposed member 33 may be made of resin or glass, and in the case of resin, may be made of a transparent material. Specific examples of the transparent material include acrylic resins and polycarbonates. When the upper disposed member 33 is transparent as described above, a state of the sealing member 15 during a test can be checked and recorded by a photographing unit (photographing unit 23) such as a camera, from the upper side of the test jig 50.

### (3-3) Leakage detection member

The leakage detection member 35 is positioned on the outer side of the sealing member 15 mounted on the mounting table 31, and includes a gas chromic material that changes a color thereof reversibly or changes an electric resistance value thereof, due to oxidation-reduction reaction. Note that the leakage detection member 35 and the sealing member 15 may be disposed so as to be in contact with each other or may be disposed so as to be spaced apart from each other by a gap.

A material of the leakage detection member 35 is not particularly limited, but may be, for example, resin, rubber, or the like.

A position of the leakage detection member 35 is not particularly limited as long as it is located on the outer side of the sealing member 15. For example, the leakage detection member 35 may be positioned, as a sheet member 37, on the mounting table 31 or the upper disposed member 33, or may be positioned, as a protrusion 39, on the mounting table 31. The leakage detection member 35 may be both the sheet member 37 and the protrusion 39. In this way, it is possible to more accurately confirm the presence or absence of leak and a position of leak.

### (3-3a) Sheet member

The test jig 50 may further include a sheet member 37 having a sheet shape that is disposed on at least one side of the mounting table 31 side and the upper disposed member 33 side of the sealing member 15, and a sealing member is disposed to be positioned on the outer side of the sheet member 37 during a leak test for the sealing member. The sheet member 37 on the at least one side may constitute at least a part of the leakage detection member 35. Here, the sheet member 37 has a sheet shape, which includes "a shape of a thin film".

A state in which the sheet member 37 is positioned is not particularly limited, and a range where the sheet member 37 is positioned (a film forming range when the sheet member having a shape of a thin film is formed) may be the entire surface of the mounting table 31 or the like, or a part of the entire surface of the mounting table 31 such as an edge (a boundary) region thereof with a contact surface of the sealing member.

Note that the sheet member 37 may be a single layer sheet, or a multi-layer sheet in which a thin film in which the gas chromic material is dispersed using a polymer material as a binder, and a further polymer material film on the thin film are arranged may be used.

### (3-3b) Protrusion

The test jig 50 may further include a protrusion 39 that protrudes from the mounting surface 31a of the mounting table 31, and the protrusion 39 may constitute at least a part of the leakage detection member 35 when the sealing member 15 is disposed in contact with the inner surface of the protrusion 39 to be tested.

The protrusion 39 may be a continuous ring as shown in FIG. 6 or a discontinuous ring as long as it is in contact with the sealing member 15. In addition, distribution of the gas chromic material in the protrusion 39 may exist only in the inner surface portion thereof in contact with the sealing member 15, or may exist throughout therein.

The protrusion 39 may be formed integrally with the mounting table 31 or may be formed separately from the mounting table 31. In the case of being formed separately from the mounting table 31, it is preferably fixed to the mounting table 31.

The protrusion 39 may be made of an elastic material, and the material thereof is not particularly limited, and examples thereof include fluororubber and the like.

### (4) Test apparatus

One embodiment of a test apparatus according to the present invention is a test apparatus 200 for a sealing member shown in FIG. 7. In the test apparatus 200, the sealing member 15 is set at a predetermined position and then a test fluid such as hydrogen is supplied to a seal surface thereof (inner area of the sealing member), whereby leak of the test fluid form the seal surface is detected.

The test apparatus 200 includes the above-described test jig 50, a photographing unit that records changes of the leakage detection member 35 in the test jig 50, a test fluid supplying unit 25, and a leak amount measuring unit 60. The test jig 50 and the test fluid supplying unit 25 are connected by pipes. The test jig 50 functions as a test unit. The test fluid supplying unit 25 is, for example, a reservoir for supplying a test fluid such as hydrogen to the test jig 50 which is a test unit.

The test apparatus 200 for a sealing member includes the above-described test jig 50, whereby the presence or absence of leakage in the sealing member 15 and a position of leakage can be easily and accurately detected, and further, the leak amount measuring unit 60 can measure a leak amount of the leaking fluid, thereby improving effect of the leakage countermeasure.

When a change in color of the sealing member 15 is checked, there are a first method in which the test jig 50 is disassembled after the test to check it, and a second method in which it is checked during the test by using the test jig 50 a part of which is made of a transparent member. In addition, when it is difficult to visually determine a change in color, it is possible to identify a leak position by analyzing an image captured by the imaging unit 23 such as a camera.

In the test apparatus 200 shown in FIG. 7, at least one (preferably, the upper disposed member 33) of two members (that is, the upper disposed member 33 and the mounting table 31 of the test jig 50) that hold the sealing member 15 is a transparent member (for example, acrylics, glasses, or the like) that can transmit light. The test apparatus 200 employs the second method described above, and detects discoloration of a leaked portion by the camera 23a (the photographing unit 23).

The imaging unit 23 is not particularly limited as long as it is capable of recording the presence or absence of leakage and a position of leakage in the sealing member 15, and a predetermined device can be adopted as appropriate.

The leak amount measuring unit 60 measures a leak amount of the leaking fluid, and includes a dispersed rubber sheet 38 that is a probe disposed between the sealing member 15 to be tested and the protrusion 39 (the leak detecting member 35). Specifically, the leak amount measuring unit 60 may be a pressure gauge, a flow rate gauge, a leak detector, or the like, and a leak amount may be detected by a change in an electric resistance value of the dispersed rubber sheet 38. Incidentally, it is not possible to grasp a leak amount by the above-described test jig 50 alone in which only a change in color can be confirmed, but if combined with the leakage amount measuring unit 60, it is possible to distinguish a portion where a large leak amount of leak is likely to occur and a portion where minute leak is likely to occur. Since cause of leak may be different depending on a leak amount, use of the combination of the leakage amount measuring unit 60 and the test jig 50 makes it possible to take more effective countermeasures against leak.

### (5) Leak detection member

The leak detection member according to the present invention includes a cylindrical elastic portion having a cylindrical shape that is formed by an elastic material including a gas chromic material that changes a color thereof reversibly or changes an electric resistance value thereof, due to oxidation-reduction reaction, and at least one pair of electrodes that are disposed on an outer peripheral surface of the cylindrical elastic portion. Such a leak detection member can easily and accurately detect the presence or absence of a leak of gas or the like from a pipe or the like and a position of leak.

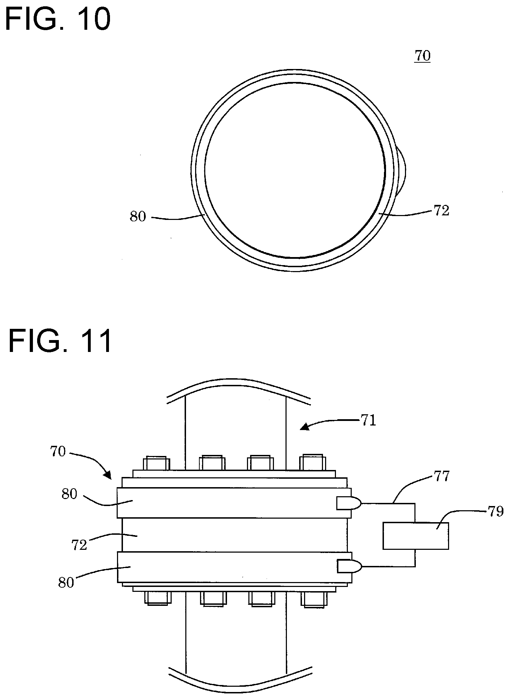

FIG. 9 and FIG. 10 show a leak detection member 70 which is an embodiment of a leak detection member according to the present invention. The leak detection member 70 includes a cylindrical elastic portion 72 having a cylindrical shape that is formed by an elastic material including a gas chromic material that changes a color thereof reversibly or changes an electric resistance value thereof, due to oxidation-reduction reaction, and a pair of electrodes 80 that are respectively disposed on one end surface 73 side and on the other end face 75 side of an outer peripheral surface of the cylindrical elastic portion 72.

Such a leak detection member 70 can easily and accurately detect the presence or absence of leak of gas or the like from a pipe or the like and a position of leak.

Here, as shown in FIG. 11, the leak detection member 70 is an appliance that is attached to a bond portion (fastening portion) or the like of a pipe 71 for hydrogen or the like and detects leak from the bond portion or the like by change in color or an electrical resistance thereof. Further, as shown in FIG. 11, a conductor 77 is attached to the leak detection member 70 and connected to a measuring device 79 such as a voltmeter or an ammeter, whereby when leak occurs, it is possible to detect the leak by confirming not only change in color but also change in an electrical resistance.

### (5-1) Cylindrical elastic portion

The cylindrical elastic portion 72 has a cylindrical shape and is formed by an elastic material including a gas chromic material that changes a color thereof reversibly or changes an electric resistance value thereof, due to oxidation-reduction reaction.

The cylindrical elastic portion 72 is not particularly limited in a size thereof and a shape of an opening thereof as long as it is cylindrical, and they can be appropriately determined in accordance with a shape and a size of a pipe or the like to which the leak detection member 70 is attached. Specifically, the cylindrical elastic portion 72 may have a circular cylindrical shape or the like. The cylindrical elastic portion 72 may have slits or notches formed in the central axis direction thereof. This is because formation of the slits and the notches facilitates piping work or the like. Here, it should be noted that the cylindrical elastic portion 72 that lacks a part thereof due to formation of a notch should be taken as still having a "cylindrical shape".

A material of the elastic material of the cylindrical elastic portion 72 is not particularly limited, and examples thereof include vinyl methyl silicone rubber (VMQ), vinylidene fluoride rubber (FKM), ethylene propylene diene rubber (EPDM), and acrylonitrile-butadiene rubber (NBR).

### (5-2) Pair of electrodes

The pair of electrodes 80 are respectively disposed on one end surface 73 side and on the other end face 75 side of an outer peripheral surface of the cylindrical elastic portion 72.

As for the pair of electrodes 80, conventionally known electrodes can be employed, and the positions of the electrodes are not particularly limited and can be appropriately determined.

Note that each electrode may be an annular electrode disposed along the outer peripheral surface of the cylindrical elastic portion 72, and may lack a part of the annular structure.

As shown in FIG. 11, a measuring device 79 such as an ammeter can be connected to each of the electrodes 80 and makes it possible to observe the presence or absence of change in an electric resistance value which occurs in the cylindrical elastic portion 72, and confirm (detect) leak.

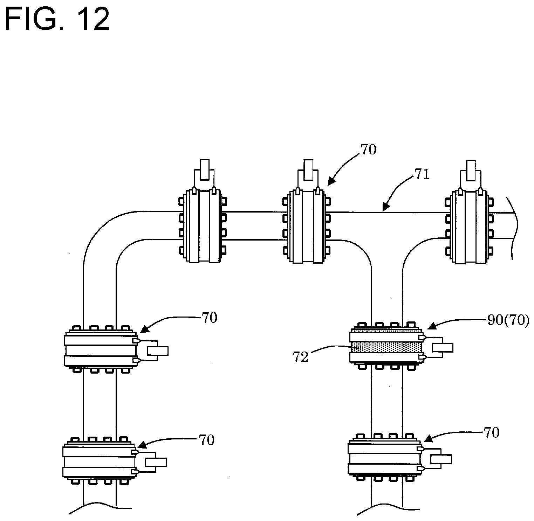

FIG. 12 shows a use state of the leak detection member 70, and the leak detection members 70 are disposed in a plurality of fastening portions of pipes. Then, an electric signal in each leak detection member 70 is caused to be transmitted, for example, wirelessly and observed. In the leakage detection member 90 disposed in a portion where leak of gas or the like has occurred, a color of its cylindrical elastic portion 72 changes, and further, a current resistance value of its cylindrical elastic portion 72 changes. The plurality of leak detection members 70 are used as described above, which makes it possible to quickly and easily identify a fastening portion among the plurality of fastening portions, in which leak occurs. Specifically, for example, in a factory, the leak detection members 70 may be attached to bond portions or the like of pipes through which hydrogen flows, and electric signals sent from these leakage detection members 70 may be monitored for 24 hours. By monitoring the electric signal in this way, even when a leak occurs, it is possible to quickly identify a fastening portion among a lot of the fastening portions, in which leak occurs.

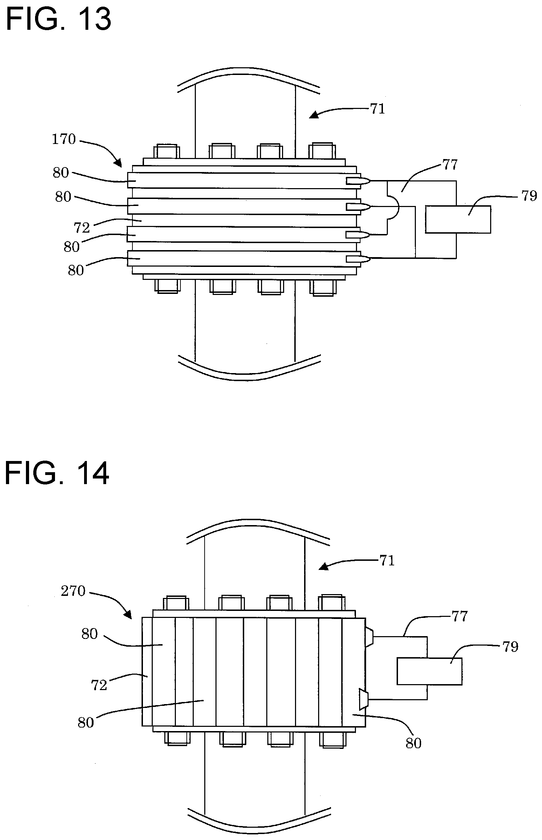

FIG. 13 shows a leak detection member 170 which is another embodiment of a leak detection member according to the present invention. The leak detection member 170 includes the cylindrical elastic portion 72 and a plurality of pairs of the electrodes 80 that are disposed on the surface of the cylindrical elastic portion 72. Including the plurality of pairs of the electrodes 80 as described above makes it possible to detect leak more accurately. The plurality of pairs of the electrodes 80 are disposed side by side in a direction (a central axis direction) in which the cylindrical elastic portion 72 extends.

FIG. 14 shows a leak detection member 270 which is another embodiment of a leak detection member according to the present invention. The leak detection member 270 includes the cylindrical elastic portion 72 and a plurality of pairs of the electrodes 80 that are disposed on the surface of the cylindrical elastic portion 72, and the plurality of pairs of the electrodes 80 are disposed in such a manner that each of the plurality of pairs of the electrodes 80 extends in a direction (a central axis direction) in which the cylindrical elastic portion 72 extends. Including the plurality of pairs of the electrodes 80 as described above makes it possible to detect a position of leak in the circumferential direction.

### Industrial Applicability

A test jig and a test apparatus for a sealing member according to the present invention can be used as a jig or an apparatus for testing the presence or absence of leakage in the sealing member in each of the j oint portions of the pipes or the like.

### Description of Symbols

10: Sealing product (rubber product)
11: Elastic material
15: Sealing member
21: Test unit
22: Upper member
23: Photographing unit
25: Test fluid supplying unit
27: Discolored part
31: Mounting table
31a: Mounting surface
33: Upper disposed member
35: Leakage detection member
37: Sheet member
38: Dispersed rubber sheet
39: Protrusion
50: Test jig
60: Leak amount measuring unit
70, 90, 170, 270: Leak detection member
71: Pipe for hydrogen
72: Cylindrical elastic portion
73: One end surface
75: The other end surface
77: Conductor
79: Measuring device
80: Electrodes
100, 200: Test apparatus

## Claims

1. A test jig (50) for performing a leakage test of a sealing member (15) having a ring shape that seals a gap between two members, comprising
a mounting table (31) that has a mounting surface (31a) on which the sealing member (15) is mounted, and
an upper disposed member (33) that is disposed on the upper side of the sealing member (15) mounted on the mounting table (31),
**characterized in that** the test jig (50) further comprises
a leakage detection member (35) that is positioned on the outer side of the sealing member (15) mounted on the mounting table (31), wherein
the leakage detection member (35) includes a gas chromic material that changes a color thereof reversibly or changes an electric resistance value thereof, due to oxidation-reduction reaction, and
when leakage from the sealing member (15) occurs, a part of the leakage detection member (35) where the leakage from the sealing member (15) is observed changes a color thereof.

2. The test jig (50) according to claim 1, comprising a sheet member (37) having a sheet shape that is disposed on at least one side of the mounting table (31) side and the upper disposed member (33) side of the sealing member (15), wherein
the sheet member (37) disposed on the at least one side constitutes at least a part of the leakage detection member (35).

3. The test jig (50) according to claim 1 or 2, comprising a protrusion (39) that protrudes from the mounting surface (31a) of the mounting table (31), wherein
the protrusion (39) constitutes at least a part of the leakage detection member (35).

4. The test jig (50) according to any one of claims 1 to 3, wherein the upper disposed member (33) is made of a transparent member.

5. The test jig (50) according to any one of claims 1 to 4, wherein
the leakage detection member (70) comprises a cylindrical elastic portion (72) having a cylindrical shape that is formed by an elastic material including the gas chromic material, and
at least one pair of electrodes (80) that are disposed on an outer peripheral surface (73, 75) of the cylindrical elastic portion (72).

6. A test apparatus (200) for a sealing member (15) comprising
the test jig (50) according to any one of claims 1 to 5, and
a photographing unit (23) that records changes of the leakage detection member (35) in the test jig (50).

## Patentansprüche

1. Prüfvorrichtung (50) zum Durchführen einer Leckprüfung eines Dichtungselements (15) mit einer Ringform, das einen Spalt zwischen zwei Elementen abdichtet, die aufweist
einen Aufspanntisch (31) mit einer Aufspannfläche (31a), auf der das Dichtungselement (15) aufgespannt wird, und
ein oberes Anordnungselement (33), das auf der Oberseite des auf dem Aufspanntisch (31) aufgespannten Dichtungselements (15) angeordnet ist, **dadurch gekennzeichnet, dass** die Prüfvorrichtung (50) ferner aufweist
ein Leckerkennungselement (35), das an der Außenseite des auf dem Aufspanntisch (31) aufgespannten Dichtungselements (15) positioniert ist, wobei das Leckerkennungselement (35) ein gaschromes Material enthält, das aufgrund einer Redoxreaktion seine Farbe reversibel ändert oder seinen elektrischen Widerstandswert ändert, und
wenn ein Leck aus dem Dichtungselement (15) auftritt, ein Teil des Leckerkennungselements (35), an dem das Leck aus dem Dichtungselement (15) beobachtet wird, seine Farbe ändert.

2. Prüfvorrichtung (50) nach Anspruch 1, die ein Folienelement (37) mit einer Folienform aufweist, das an mindestens einer Seite des Aufspanntisches (31) und an der Seite des oberen Anordnungselements (33) des Dichtungselements (15) angeordnet ist, wobei
das an der mindestens einen Seite angeordnete Folienelement (37) mindestens einen Teil des Leckerkennungselements (35) bildet.

3. Prüfvorrichtung (50) nach Anspruch 1 oder 2, die einen Vorsprung (39) aufweist, der von der Aufspannfläche (31a) des Aufspanntisches (31) vorsteht, wobei der Vorsprung (39) mindestens einen Teil des Leckerkennungselements (35) bildet.

4. Prüfvorrichtung (50) nach einem der Ansprüche 1 bis 3, wobei das obere Anordnungselement (33) aus einem transparenten Material besteht.

5. Prüfvorrichtung (50) nach einem der Ansprüche 1 bis 4, wobei
das Leckerkennungselement (70) einen zylindrischen elastischen Abschnitt (72) mit einer zylindrischen Form aufweist, der aus einem elastischen Material ausgebildet ist, das das gaschrome Material enthält, und
mindestens ein Paar Elektroden (80), die an einer Außenumfangsfläche (73, 75) des zylindrischen elastischen Abschnitts (72) angeordnet sind.

6. Prüfvorrichtung (200) für ein Dichtungselement (15), die aufweist
die Prüfvorrichtung (50) nach einem der Ansprüche 1 bis 5 und
eine Fotoaufnahmeeinheit (23), die Veränderungen des Leckerkennungselements (35) in der Prüfvorrichtung (50) aufzeichnet.

## Revendications

1. Gabarit de test (50) pour l'exécution d'un test d'étanchéité d'un élément d'étanchéité (15) de forme annulaire comblant un interstice entre deux éléments, comprenant
une table de montage (31) comportant une surface de montage (31a) sur laquelle est monté l'élément d'étanchéité (15), et
un élément supérieur (33) disposé sur la face supérieure de l'élément d'étanchéité (15) monté sur la table de montage (31),
**caractérisé en ce que** ledit gabarit de test (50) comprend en outre
un élément de détection de fuite (35) positionné sur la face extérieure de l'élément d'étanchéité (15) monté sur la table de montage (31), où
l'élément de détection de fuite (35) comprend un matériau gazochromique qui change sa couleur de manière réversible ou sa valeur de résistance électrique, en raison d'une réaction d'oxydoréduction, et où,
si l'élément d'étanchéité (15) présente une fuite, une partie de l'élément de détection de fuite (35) où la fuite provenant de l'élément d'étanchéité (15) est observée change de couleur.

2. Gabarit de test (50) selon la revendication 1, comprenant un élément en feuille (37) de forme plane disposé sur au moins un côté de la table de montage (31) et du côté de l'élément supérieur (33) de l'élément d'étanchéité (15), où l'élément en feuille (37) disposé sur ledit au moins un côté constitue au moins une partie de l'élément de détection de fuite (35).

3. Gabarit de test (50) selon la revendication 1 ou la revendication 2, comprenant une saillie (39) s'étendant depuis la surface de montage (31a) de la table de montage (31),
ladite saillie (39) constituant au moins une partie de l'élément de détection de fuite (35).

4. Gabarit de test (50) selon l'une des revendications 1 à 3, où l'élément supérieur (33) est constitué d'un élément transparent.

5. Gabarit de test (50) selon l'une des revendications 1 à 4, où
l'élément de détection de fuite (70) comprend une partie élastique cylindrique (72) de forme cylindrique, constituée d'un matériau élastique comprenant le matériau gazochromique, et
au moins une paire d'électrodes (80) disposées sur une surface périphérique extérieure (73, 75) de la partie élastique cylindrique (72).

6. Dispositif de test (200) pour un élément d'étanchéité (15), comprenant
le gabarit de test (50) selon l'une des revendications 1 à 5, et
une unité photographique (23) enregistrant les variations de l'élément de détection de fuite (35) dans le gabarit de test (50).
